# EUROPÄISCHE PATENTSCHRIFT

(11) **EP 3 300 818 B1**
(45) Veröffentlichungstag und Bekanntmachung des Hinweises auf die Patenterteilung: **08.01.2020**
(21) Anmeldenummer: 17192129.9
(22) Anmeldetag: 20.09.2017
(51) Int. Cl.: B22F 3/00, A61C 13/20, F27B 17/02, B22F 3/10

(54) **VERFAHREN ZUM SINTERN EINER DENTALKONSTRUKTION UND ANORDNUNG ZUM SINTERN EINER DENTALKONSTRUKTION**
METHOD FOR SINTERING A DENTAL STRUCTURE AND ARRANGEMENT FOR SINTERING A DENTAL STRUCTURE
PROCÉDÉ DE FRITTAGE D'UNE STRUCTURE DENTAIRE ET DISPOSITIF DE FRITTAGE D'UNE STRUCTURE DENTAIRE

(30) Priorität: 28.09.2016 AT 508702016
(43) Veröffentlichungstag der Anmeldung: 04.04.2018
(73) Patentinhaber: STEGER, Heinrich, 39031 Bruneck (IT)
(72) Erfinder: STEGER, Heinrich, 39031 Bruneck (IT)
(74) Vertreter: Torggler & Hofinger Patentanwälte

(56) Entgegenhaltungen:
- EP-A1- 2 792 332
- EP-A1- 2 974 689
- WO-A1-02/066693
- DE-A1-102012 019 159
- JP-A- H06 330 105
- US-A- 5 911 102

## Beschreibung

Die vorliegende Erfindung betrifft ein Verfahren zum Sintern einer Dentalkonstruktion. Zudem betrifft die Erfindung eine Anordnung zum Sintern einer Dentalkonstruktion mit einem Sinterofen, in welchem ein verschließbarer Heizraum ausgebildet ist und zumindest einer beim Sintern im Heizraum angeordneten Dentalkonstruktion.

Das Sintern wird bei der Herstellung von Zahnersatzteilen bereits seit vielen Jahrzehnten als ein wesentlicher Herstellungsschritt eingesetzt. Es dient vor allem dazu, dass die Bestandteile des Zahnersatzteils so hart werden, dass die derart hergestellten Zahnersatzteile den hohen Beanspruchungen, denen ein menschliches Gebiss ausgesetzt ist, standhalten.

Im Bereich der Dentalindustrie werden von Zahntechnikern bereits seit vielen Jahren Sinteröfen eingesetzt, welche speziell für das Sintern von Dentalkonstruktionen ausgelegt sind. Ein Beispiel dafür geht aus der EP 2 703 760 B1 hervor. Diese zeigt im Speziellen einen im Heizraum angeordneten Vakuumbehälter, in welchem der Zahnersatz beim Sintern angeordnet ist. Auch die EP 2 974 689 A1 zeigt eine Anordnung zum Sintern eines Dentalwerkstücks in einem Gehäuse, in welchem ein Vakuum erzeugbar ist. Das Dentalwerkstück ist dabei an einer Haltevorrichtung aufgehängt.

Wenn beim Sintern in den genannten Sinteröfen Dentalkonstruktionen mit einem Metallanteil verwendet werden, kann es durch die Reaktion mit im Heizraum vorhandenem Sauerstoff zu einer Oxidation kommen. Dadurch wird die Oberflächenbeschaffenheit der hergestellten Dentalkonstruktion negativ beeinflusst. Zudem wird die Herstellung verzögert, da ein zusätzlicher Schritt zur Reinigung der oxidierten Oberfläche notwendig ist.

Die EP 2 792 332 B1 zeigt eine Anordnung mit zumindest einem zu sinternden Werkstück und mit zumindest einem Stützmaterial. Das Werkstück steht über das Stützmaterial über. Zudem wird ein Schutzgas durch das Stützmaterial hindurch dem Werkstück zugeführt. Das Stützmaterial kann ein Sauerstoff an sich bindendes Material sein, wobei das Stützmaterial eine höhere Sauerstoffaffinität aufweist als das Werkstück. Unter Sauerstoffaffinität wird dabei das Bestreben eines Stoffes bzw. eines Materials verstanden, Sauerstoff, insbesondere durch chemische Reaktion, an sich zu binden. Bei diesem Stützmaterial kann es sich um im Handel erhältliche sogenannte Sinterperlen, z. B. aus mit Yttrium teilstabilisiertem Zirkoniumdioxid handeln. Auch andere keramische Stützkörner oder Mischungen daraus können als Stützmaterial zum Einsatz kommen. Den keramischen Stützkörnern kann auch ein Zusatzmaterial beigemengt werden kann. Dabei wird als Zusatzmaterial ein Material oder eine Materialmischung verwendet, welche zumindest ein chemisches Element oder zumindest eine chemische Verbindung aufweist, welche eine höhere Sauerstoffaffinität als das Material des Werkstücks bzw. als das Material der keramischen Stützkörner aufweist. Solche Zusatzmaterialien mit hoher Sauerstoffaffinität sind z. B. Metalle oder Metalllegierungen. Es kommen aber auch keramische Zusatzmaterialien in Frage. Der Zusatz kann in Pellets oder Pulverform vorliegen. Beim Zusatzmaterial kann es sich z. B. um Kobalt, Chrom, Molybdän, Titan oder Titanlegierungen handeln.

Nachteilig bei der letztgenannten Schrift ist der hohe Herstellungsaufwand, da immer ein Schutzgas in Form von Argon und/oder Stickstoff zugeführt werden muss. Somit muss der Zahntechniker immer ein Schutzgas zum Nachfüllen vorrätig haben. Zudem ist die ständige Verwendung von Schutzgas relativ teuer.

Weiters betrifft die Erfindung ein Verfahren, bei dem zusätzlich das Verfahren zum Sintern einer Dentalkonstruktion unter Verwendung eines sauerstoffaffinen Sauerstoffbindeelements durchgeführt wird, wobei das Sintern der Dentalkonstruktion zumindest zeitweise in einer Luftatmosphäre stattfindet, wobei das Sauerstoffbindeelement im Wesentlichen aus Titan enthaltendem Metall oder aus einer Titan enthaltenden Metalllegierung besteht, wobei der Anteil an Titan am Sauerstoffbindeelement zumindest 80 % beträgt und wobei die Dentalkonstruktion aus einer Kobalt-Chrom-Molybdän-Legierung besteht.

Die US 5,911,102 zeigt eine solche Dentalkonstruktion, welche auch Kobalt, Chrom und Molybdän aufweisen kann, wobei die Dentalkonstruktion zu maximal 60 Gewichtsprozent aus Chrom, Kobalt und Molybdän besteht. Der restliche Bestandteil bzw. der Hauptbestandteil ist Titan. Das Sauerstoffbindeelement ("getter") kann aus Titan oder einer Titanlegierung bestehen. Nachteilig hierbei ist, dass auch das Titan der Dentalkonstruktion zu einem großen Teil den Sauerstoff bindet und somit die Oberfläche der Dentalkonstruktion durch Oxidieren negativ beeinflusst werden kann.

Die Aufgabe der vorliegenden Erfindung besteht daher darin, ein gegenüber dem Stand der Technik verbessertes Verfahren und eine verbesserte Anordnung zu schaffen. Insbesondere sollen das Verfahren und die Anordnung weniger aufwändig sein und negative Beeinflussungen der Oberfläche der Dentalkonstruktion beim Sintern verhindert werden.

Dies wird durch ein Verfahren mit den Merkmalen von Anspruch 1 erreicht. Die erfindungsgemäße Aufgabe wird auch durch eine Anordnung mit den Merkmalen von Anspruch 10 gelöst.

Eine Luftatmosphäre kann bevorzugt so definiert werden, dass sie einen Sauerstoff-Volumenanteil in einem Bereich von 20 % bis 22 % und einen Stickstoff-Volumenanteil in einem Bereich von 77 % bis 79 % aufweist. Einerseits wird somit durch das Sauerstoffbindeelement der in der Luftatmosphäre vorhandene Sauerstoff gebunden, wodurch der Sauerstoff nicht oder kaum an der Oberfläche der Dentalkonstruktion oxidiert. Andererseits ist keine aufwändige Schutzgaszufuhr notwendig, sondern es wird die normale Umgebungsluft als Atmosphäre beim Sintern verwendet. Das Sintern erfolgt demnach schutzgasfrei.

Bevorzugt ist vorgesehen, dass das Sintern der Dentalkonstruktion in einer Luftatmosphäre beginnt. Besonders bevorzugt erfolgt auch während des gesamten Sintervorganges keine aktive Beeinflussung der Luftatmosphäre. Veränderungen der Zusammensetzung der Luftatmosphäre ergeben sich daher nur durch den Sintervorgang selbst und durch das Sauerstoffbindeelement.

Es ist generell möglich, dass zum Sintern eine Luftatmosphäre verwendet wird, welche von der auf der Erdoberfläche vorkommenden Luftzusammensetzung abweicht. Es können also je nach Anwendung gezielt zusätzliche Gasanteile in den Heizraum zugeführt werden. Bevorzugt ist allerdings vorgesehen, dass die Luftatmosphäre einen Sauerstoff-Volumenanteil von genau 20,94 % und einen Stickstoff-Volumenanteil von genau 78,08 % aufweist. Weiters ist vorgesehen, dass die Luftatmosphäre einen Argon-Volumenanteil von 0,8 bis 1 %, vorzugsweise von 0,93 %, aufweist. Zudem weist die Luftatmosphäre einen Volumenanteil an Spurengasen (u. a. Kohlenstoffdioxid, Neon, Helium, Methan, Krypton, Wasserstoff, usw.) von unter 0,1 %, vorzugsweise von 0,04 %, auf. Diese Luftzusammensetzung entspricht trockener Luft auf Meereshöhe bei 1.013,25 hPa. Wenn die Messung der Luftzusammensetzung bei feuchterer Luft und bei anderer Meereshöhe und anderen Luftdruckverhältnissen erfolgt, können sich die Volumenanteile geringfügig von den oben angegebenen Werten unterscheiden.

Während des gesamten Sintervorgangs ändert sich die Prozentverteilung der Luftatmosphäre dahingehend, dass sich der Sauerstoffanteil verringert, da die Sauerstoffmoleküle am Sauerstoffbindeelement gebunden werden. Somit liegt die Luftatmosphäre im Heizraum vor allem zu Beginn der Sinterung vor. Es ist aber auch vorgesehen, dass in einer Heizphase bei Erreichen von zumindest 80 %, vorzugsweise bei zumindest 90 %, der Sintertemperatur die Luftatmosphäre weiterhin einen Sauerstoff-Volumenanteil in einem Bereich von 20 % bis 22 % und einen Stickstoff-Volumenanteil in einem Bereich von 77 % bis 79 % aufweist. Dabei wird davon ausgegangen, dass diese Gase (Sauerstoff und Stickstoff) denselben Temperaturausdehnungskoeffizienten haben. Die Sintertemperatur kann beispielsweise in einem Bereich zwischen 1.100° C und 1.500° C, vorzugsweise zwischen 1.200° C und 1.250° C, liegen. Bei einem Sintervorgang von insgesamt beispielsweise 5 bis 10 Stunden, vorzugsweise von 8 bis 9 Stunden, wird die Sintertemperatur nach ca. 1 bis 3 Stunden erreicht. Die Sintertemperatur wird für 3 bis 6 Stunden, vorzugsweise für 4,5 bis 5,5 Stunden, gehalten. Anschließend folgt eine Abkühlphase. Natürlich können sich - vor allem hinsichtlich des Temperaturverlaufs - relativ stark unterscheidende Sintervorgänge je nach Art und Zusammensetzung der zu sinternden Dentalkonstruktion durchgeführt werden.

Grundsätzlich ist bevorzugt vorgesehen, dass das Sintern in einem verschließbaren Heizraum eines Sinterofens durchgeführt wird. Spezielle Sinteröfen zum Sintern von Dentalkonstruktionen werden bereits seit vielen Jahren von Zahntechnikern eingesetzt.

Prinzipiell soll nicht ausgeschlossen werden, dass während des Sinterns zumindest zeitweise ein Überdruck herrscht. Gemäß einer ersten Variante kann aber vorgesehen sein, dass im Heizraum beim Sintern Druck von weniger als 1.030 hPa herrscht. Bevorzugt herrscht im Heizraum beim Sintern Normaldruck. Dieser Normaldruck von 1.013,25 hPa auf Meereshöhe herrscht vor allem zu Beginn des Sintervorgangs. Während des Aufheizens und Sinterns kann der Luftdruck im Heizraum ohne absichtliche Beeinflussung innerhalb gewisser Grenzen schwanken.

Gemäß einer zweiten Variante kann vorgesehen sein, dass im Heizraum ein Unterdruck von mehr als 300 hPa oder ein Vakuum, vorzugsweise ein Grobvakuum zwischen 300 und 1 hPa oder ein Feinvakuum zwischen 1 und 0,001 hPa, erzeugt wird, wobei das Sintern bei Unterdruck oder im Vakuum durchgeführt wird. Es können auch noch feinere Vakua erzeugt werden. Das im Heizraum erzeugte Vakuum kann bereits zu Beginn des Sintervorgangs vorliegen. Das Vakuum kann auch nur zeitweise, also für einen bestimmten Zeitraum oder zu verschiedenen Zeiträumen aufrecht sein. Bevorzugt ist das Vakuum bzw. der Unterdruck während des gesamten Sintervorgangs aufrecht. Generell befindet sich in jedem der genannten Vakua immer noch Luft, lediglich die Konzentration der Luft wird geringer. Das heißt, auch im Vakuum entspricht die Prozentverteilung der Volumenanteile von Sauerstoff, Stickstoff, Argon usw. immer noch der einer Luftatmosphäre. In einem Vakuum ist lediglich die Gesamtzahl der Moleküle im Heizraum geringer. Im Speziellen befinden sich bei Normaldruck in etwa 2,7x10¹⁹ (27 Trillionen) Moleküle in jedem cm³ Luft. In einem Grobvakuum sind 10¹⁹ (10 Trillionen) bis 10¹⁶ (10 Billiarden) Moleküle in jedem cm³ vorhanden, während in einem Feinvakuum immer noch 10¹⁶ (10 Billiarden) bis 10¹³ (10 Billionen) Moleküle in jedem cm³ vorhanden sind.

Um eine Oxidation an der Oberfläche der Dentalkonstruktion zu verhindern, ist vorgesehen, dass die Sauerstoffaffinität des Sauerstoffbindeelements größer ist als die Sauerstoffaffinität der Dentalkonstruktion.

Erfindungsgemäß ist vorgesehen, dass das Sauerstoffbindeelement im Wesentlichen aus Metall oder aus einer Metalllegierung besteht. Der Metallanteil sollte dabei zumindest 85 %, vorzugsweise zumindest 95 %, betragen. Hierzu ist erfindungsgemäß vorgesehen, dass das Sauerstoffbindeelement Titan enthält, wobei der Anteil an Titan am Sauerstoffbindeelement zumindest 80 %, vorzugsweise zumindest 95 %, beträgt. Im Speziellen wird Titan mit einer Reinheit von mindestens 98,5 % verwendet. Das verwendete Titan hat eine Schmelzetemperatur von ca. 1.700° C und eine Siedetemperatur von ca. 3.260° C. Je nach Legierungszusammensetzung variieren dann auch Eigenschaften wie Schmelz- oder Siedetemperatur.

Generell kann das Sauerstoffbindeelement pulverförmig, granulatförmig, massiv oder in einer anderen Form ausgebildet sein. Wichtig ist, dass die Oberfläche des Sauerstoffbindeelements relativ zu dessen Volumen relativ groß ist. Bevorzugt ist deshalb vorgesehen, dass das Sauerstoffbindeelement schwammförmig ausgebildet ist.

Dentalkonstruktionen können in Form von Brücken, Abutments, Kronen, Einzelkonstruktionen, Stegen, usw. ausgebildet sein. Es ist keine Limitierung auf die endgültige Form gegeben.

Hinsichtlich der Dentalkonstruktion ist erfindungsgemäß vorgesehen, dass diese im Wesentlichen aus einer Kobalt-Chrom-Legierung besteht. Vorzugsweise weist die Kobalt-Chrom-Legierung einen Anteil von 50 bis 70 Gewichtsprozent an Kobalt und einen Anteil von 20 bis 31 Gewichtungsprozent an Chrom auf. Die Kobalt-Chrom-Legierung besteht erfindungsgemäß zumindest zu 80 Gewichtsprozent aus Kobalt und Chrom und ganz bevorzugt zu zumindest 90 Gewichtsprozent aus Kobalt und Chrom. Zusätzlich kann die Kobalt-Chrom-Legierung noch zumindest einen oder mehrere Anteile aufweisen, die ausgewählt sind aus der Gruppe Molybdän (Mo), Mangan (Mn), Silizium (Si), Wolfram (W), Eisen (Fe), Nickel (Ni), Aluminium (Al), Titan (Ti), Phosphor (P), Bor (B), Cadmium (Cd), Beryllium (Be), Carbon (C), Schwefel (S), Sauerstoff (O) und Stickstoff (N). Erfindungsgemäß ist vorgesehen, dass die Kobalt-Chrom-Legierung einen Anteil von zumindest 3 Gewichtsprozent an Molybdän aufweist, wobei der Anteil an Molybdän bevorzugt zwischen 5 und 8 Gewichtsprozent liegt. Beispielsweise kann die Dentalkonstruktion aus einem Formrohling herausgearbeitet, vorzugsweise herausgefräst, sein, wie er in der WO 2015/154872 A1 beschrieben ist. Somit bilden die in dieser Schrift angeführt Materialien die Dentalkonstruktion. Normen, welche für die Zusammensetzung von Kobalt-Chrom-Legierungen herangezogen werden können, sind unter anderem die ISO 5832-12 oder auch ASTM F1537.

Wenn eine titanbasierte Legierung für die Dentalkonstruktion verwendet werden würde, so würde nicht nur das titanbasierte Sauerstoffbindeelement Sauerstoff anziehen, sondern auch die Dentalkonstruktion selbst, wodurch die Dentalkonstruktion beim Sintern oxidieren würde. Um dies zu vermeiden ist deshalb besonders bevorzugt vorgesehen, dass einerseits eine Legierung für die Dentalkonstruktion verwendet wird, welche zu zumindest 95 Gewichtsprozent aus Kobalt, Chrom und Molybdän besteht, und andererseits ein Sauerstoffbindeelement verwendet wird, welches zu zumindest 95 Gewichtsprozent aus Titan besteht. Bei dieser Kombination ergibt sich ein besonderer Synergieeffekt dahingehend, dass das Titan des Sauerstoffbindeelements einen Großteil des Sauerstoffs der Luftatmosphäre bindet und die Oberfläche der Dentalkonstruktion nicht bzw. kaum oxidiert.

Die erfindungsgemäße Aufgabe wird auch durch eine Anordnung mit den Merkmalen von Anspruch 10 gelöst. Demnach weist die Anordnung zum Sintern einer dentalen Konstruktion einen Sinterofen auf, in welchem ein verschließbarer Heizraum ausgebildet ist, wobei der Heizraum beim Sintern zumindest zeitweise mit einer Luftatmosphäre gefüllt ist, welche vorzugsweise einen Sauerstoff-Volumenanteil in einem Bereich von 20 % bis 22 % und einen Stickstoff-Volumenanteil in einem Bereich von 77 % bis 79 % aufweist. Zudem sind zumindest eine Dentalkonstruktion und ein sauerstoffaffines Sauerstoffbindeelement beim Sintern im Heizraum angeordnet. Bevorzugt herrscht beim Sintern im Heizraum ein Luftdruck von unter 1.030 hPa, vorzugsweise Normaldruck, Unterdruck oder ein Vakuum.

Bezüglich des Heizraums ist bevorzugt vorgesehen, dass der Heizraum entweder direkt in einem Gehäuse des Sinterofens oder in einem in das Gehäuse ragenden Vakuumbehälter ausgebildet ist. Der Heizraum ist also jener Bereich, der beheizt wird und direkt die zu sinternde Dentalkonstruktion beherbergt. Es können auch mehrere unterschiedliche Dentalkonstruktionen zeitgleich gesintert werden.

Gemäß einem bevorzugten Ausführungsbeispiel ist dazu vorgesehen, dass das zumindest eine Sauerstoffbindeelement in einem, vorzugsweise in einem seitlichen Bereich des Heizraums angeordneten, Behälter abgelegt ist.

Bevorzugt ist darauf zu achten, dass das Sauerstoffbindeelement nicht in direkten Kontakt mit der Dentalkonstruktion steht. Das Sauerstoffbindeelement ist also beabstandet zur Dentalkonstruktion angeordnet.

Um einen Verzug des zu sinternden Materials zu vermeiden, ist bevorzugt vorgesehen, dass zumindest eine im Heizraum angeordnete Haltevorrichtung zum Halten der Dentalkonstruktion vorgesehen ist. Dabei ist bevorzugt vorgesehen, dass die Dentalkonstruktion an der Haltevorrichtung im Heizraum aufgehängt ist. Vor allem kleinere Arbeiten können aber auch einfach im Heizraum stehen bzw. abgestellt werden.

Bevorzugt weist die Anordnung weiters eine Unterdruck- oder Vakuumerzeugungsvorrichtung auf, mit der im Heizraum der Unterdruck oder das Vakuum, vorzugsweise ein Grobvakuum oder ein Feinvakuum, erzeugbar ist. Im Speziellen kann eine Vakuumpumpe eingesetzt werden, mit der ein Druck von unter 1 mbar (entspricht 1 hPa) im Heizraum erzeugt werden kann.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: in einem Querschnitt einen Sinterofen mit in einem Vakuumbehälter angeordneter Dentalkonstruktion,
- Fig. 2: in einem Querschnitt einen Sinterofen mit direkt im Heizraum angeordneter Dentalkonstruktion und
- Fig. 3a-3c: verschieden Ansichten einer Haltevorrichtung samt daran aufgehängten Dentalkonstruktionen.

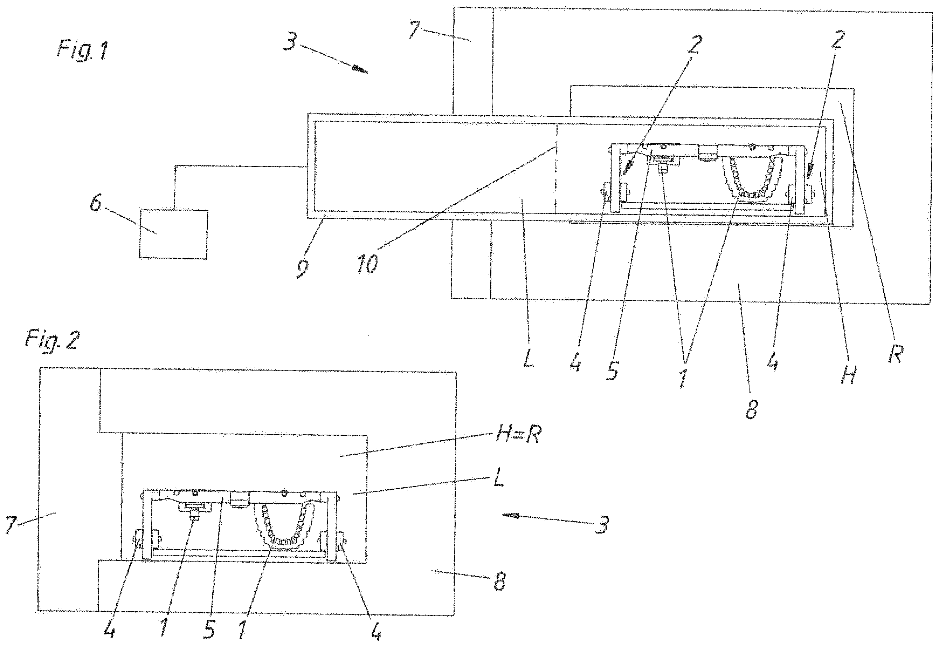

Fig. 1 zeigt einen Sinterofen 3 in einem Querschnitt. Dieser Sinterofen 3 weist einen durch die Tür 7 verschließbaren Ofenraum R und ein Gehäuse 8 auf. Ein vorzugsweise rohrförmiger Vakuumbehälter 9 ragt in den Ofenraum R. Durch Beheizen des Ofenraums R ist auch der im Vakuumbehälter 9 ausgebildete Heizraum H beheizbar. Der Vakuumbehälter 9 ist mit der Tür 7 des Sinterofens 3 verbunden. Durch eine nur schematisch dargestellte Unterdruck- oder Vakuumerzeugungsvorrichtung 6 ist im Vakuumbehälter 9 eine Unterdruck oder eine Vakuum erzeugbar ist. Im Vakuumbehälter 9 ist eine Luftatmosphäre L vorhanden. Zwei Dentalkonstruktionen 1 sind an einer im Vakuumbehälter 9 angeordneten Haltevorrichtung 5 aufgehängt. In den seitlich neben den Dentalkonstruktionen 1 angeordneten Behältern 4 liegen sauerstoffaffine Sauerstoffbindeelemente 2. Wenn die Sinterung bei im Vakuumbehälter 9 angeordneter Dentalkonstruktion 1 erfolgt, kann jener Bereich des Vakuumbehälters 9, welcher aus dem Ofenraum R hinausragt, im Inneren mit einer strichliert dargestellt Trennvorrichtung 10 abgetrennt sein, damit nicht zu viel Wärme im linksseitigen, ungenutzten Raum verloren geht. Alternativ zur dargestellten Variante kann auch vorgesehen sein, dass der Vakuumbehälter 9 im Ofenraum R verbleibt und lediglich eine Verschlussvorrichtung des Vakuumbehälters 9 geöffnet werden muss, um die Dentalkonstruktion 1 hineinzugeben und zu entnehmen.

Demgegenüber sind gemäß Fig. 2 die Dentalkonstruktionen 1 direkt im mit einer Luftatmosphäre L gefüllten Ofenraum R, welcher gleichzeitig den Heizraum H bildet, angeordnet. Die Beheizung des Ofenraums R bzw. des Heizraums H erfolgt über eine nicht näher dargestellte Heizvorrichtung.

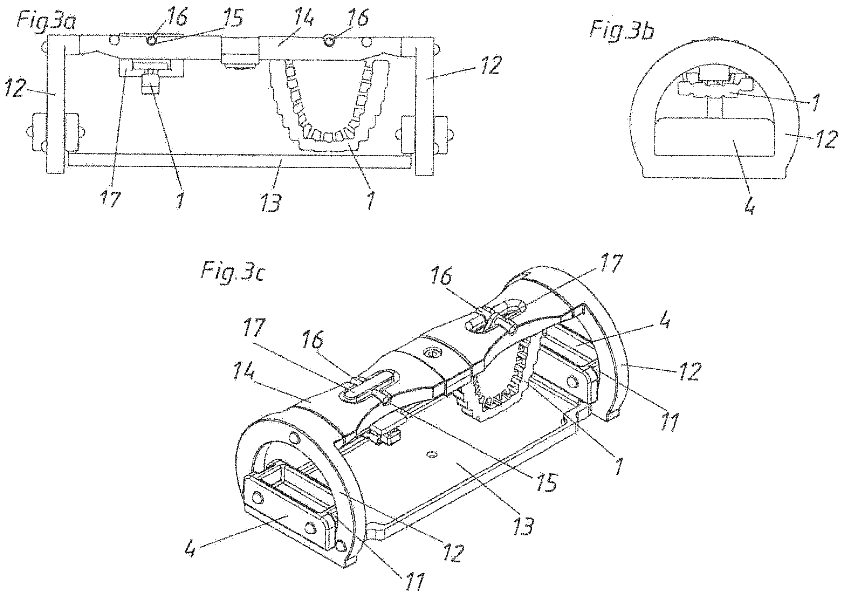

Die Fig. 3a zeigt die Haltevorrichtung 5 samt aufgehängten Dentalkonstruktionen 1 in einem Längsschnitt, die Fig. 3b in einem Querschnitt und die Fig. 3c in einer perspektivischen Ansicht. Die Behälter 4 sind über, als Vertiefungen ausgeführte Führungen 11 an den seitlichen Trägern 12 der Haltevorrichtung 5 gehalten. Die in die Behälter 4 gelegten Sauerstoffbindeelemente 2 sind hier nicht dargestellt. Zwischen den beiden seitlichen Trägern 12 ist eine Basisplatte 13 mit einer wannenförmigen Vertiefung angeordnet. Im oberen Bereich sind die seitlichen Träger 12 über eine Haltekonsole 14 verbunden. In den Vertiefungen 15 dieser Haltekonsole 14 sind über Stifte 16 Aufhängelemente 17 gehalten. An diesen Aufhängelementen 17 wiederum sind die Dentalkonstruktionen 1 gehalten. Die rechtsseitig dargestellte Dentalkonstruktion 1 ist als zirkulär geformte Brückenkonstruktion ausgebildet, während die linksseitig dargestellte Dentalkonstruktion 1 als kleineres Brückenelement ausgebildet ist, durch welches fünf Zähne (siehe Fig. 3b) nachgebildet sind.

### Bezugszeichenliste:

- 1: Dentalkonstruktion
- 2: Sauerstoffbindeelement
- 3: Sinterofen
- 4: Behälter
- 5: Haltevorrichtung
- 6: Unterdruck- oder Vakuumerzeugungsvorrichtung
- 7: Tür
- 8: Gehäuse
- 9: Vakuumbehälter
- 10: Trennvorrichtung
- 11: Führungen
- 12: seitliche Träger
- 13: Basisplatte
- 14: Haltekonsole
- 15: Vertiefung
- 16: Stifte
- 17: Aufhängelemente
- L: Luftatmosphäre
- H: Heizraum

## Patentansprüche

1. Verfahren zum Sintern einer Dentalkonstruktion (1) unter Verwendung eines sauerstoffaffinen Sauerstoffbindeelements (2), wobei das Sintern der Dentalkonstruktion (1) zumindest zeitweise in einer Luftatmosphäre (L) stattfindet, wobei das Sauerstoffbindeelement (2) im Wesentlichen aus Titan enthaltendem Metall oder aus einer Titan enthaltenden Metalllegierung besteht, wobei der Anteil an Titan am Sauerstoffbindeelement (2) zumindest 80 Gewichtsprozent beträgt, wobei die Dentalkonstruktion (1) aus einer Legierung besteht, welche Kobalt, Chrom und Molybdän enthält, **dadurch gekennzeichnet, dass** die Legierung zu zumindest 80 Gewichtsprozent aus Kobalt und Chrom besteht und dass die Legierung einen Anteil von zumindest 3 Gewichtsprozent an Molybdän aufweist.

2. Verfahren nach Anspruch 1, wobei die Luftatmosphäre (L) einen Sauerstoff-Volumenanteil in einem Bereich von 20 % bis 22 % und einen Stickstoff-Volumenanteil in einem Bereich von 77 % bis 79 % aufweist.

3. Verfahren nach Anspruch 1 oder 2, wobei das Sintern der Dentalkonstruktion (1) in der der Luftatmosphäre bei einem Luftdruck von weniger als 1.030 hPa beginnt.

4. Verfahren nach einem der Ansprüche 1 bis 3, wobei in einer Heizphase bei Erreichen von zumindest 80 %, vorzugsweise bei zumindest 90 %, der Sintertemperatur die Luftatmosphäre (L) weiterhin einen Sauerstoff-Volumenanteil in einem Bereich von 20 % bis 22 %, einen Stickstoff-Volumenanteil in einem Bereich von 77 % bis 79 % und einen Luftdruck von weniger als 1.030 hPa aufweist.

5. Verfahren nach einem der Ansprüche 1 bis 4, wobei das Sintern in einem verschließbaren Heizraum (H) eines Sinterofens (3) durchgeführt wird.

6. Verfahren nach Anspruch 5, wobei im Heizraum (H) beim Sintern entweder Normaldruck herrscht oder ein Unterdruck von mehr als 300 hPa oder ein Vakuum, vorzugsweise ein Grobvakuum zwischen 300 und 1 hPa oder ein Feinvakuum zwischen 1 und 0,001 hPa, erzeugt wird, wobei das Sintern bei Unterdruck oder in einem Vakuum durchgeführt wird.

7. Verfahren nach einem der Ansprüche 1 bis 6, wobei der Anteil an Titan am Sauerstoffbindeelement (2) zumindest 95 % beträgt.

8. Verfahren nach einem der Ansprüche 1 bis 7, wobei die Kobalt-Chrom-Legierung einen Anteil von 54 bis 70 Gewichtsprozent Kobalt und einen Anteil von 20 bis 31 Gewichtsprozent Chrom aufweist.

9. Verfahren nach einem der Ansprüche 1 bis 8, wobei die Kobalt-Chrom-Legierung zu zumindest 90 Gewichtsprozent aus Kobalt und Chrom besteht.

10. Anordnung zum Sintern einer Dentalkonstruktion (1), insbesondere zum Durchführen eines Verfahrens nach einem der Ansprüche 1 bis 9, mit
- einem Sinterofen (3), in welchem ein verschließbarer Heizraum (H) ausgebildet ist, wobei der Heizraum (H) beim Sintern zumindest zeitweise mit einer Luftatmosphäre (L) gefüllt ist,
- zumindest einer beim Sintern im Heizraum (H) angeordneten Dentalkonstruktion (1), wobei die Dentalkonstruktion (1) aus einer Legierung besteht, welche Kobalt, Chrom und Molybdän enthält, wobei die Legierung zu zumindest 80 Gewichtsprozent aus Kobalt und Chrom besteht und wobei die Legierung einen Anteil von zumindest 3 Gewichtsprozent an Molybdän aufweist, und
- zumindest einem beim Sintern im Heizraum (H) angeordneten sauerstoffaffinen Sauerstoffbindeelement (2), wobei das Sauerstoffbindeelement (2) im Wesentlichen aus Titan enthaltendem Metall oder aus einer Titan enthaltenden Metalllegierung besteht, wobei der Anteil an Titan am Sauerstoffbindeelement (2) zumindest 80 Gewichtsprozent beträgt.

11. Anordnung nach Anspruch 10, wobei das zumindest eine Sauerstoffbindeelement (2) in einem, vorzugsweise in einem seitlichen Bereich des Heizraums (H) angeordneten, Behälter (4) abgelegt ist.

12. Anordnung nach Anspruch 10 oder 11, mit zumindest einer im Heizraum (H) angeordneten Haltevorrichtung (5) zum Halten der Dentalkonstruktion (1).

13. Anordnung nach einem der Ansprüche 10 bis 12, mit einer Unterdruck- oder Vakuumerzeugungsvorrichtung (6), mit der im Heizraum (H) der Unterdruck oder das Vakuum, vorzugsweise ein Grobvakuum oder ein Feinvakuum, erzeugbar ist.

## Claims

1. A method for sintering a dental construction (1) using an oxygen-affine oxygen binding element (2), wherein the sintering of the dental construction is carried out at least at times in an air atmosphere (L), wherein the oxygen binding element (2) substantially consists of a metal containing titanium or of a metal alloy containing titanium, wherein the proportion of titanium in the oxygen binding element (2) is at least 80 percent by weight, wherein the dental construction (1) consists of an alloy which contains cobalt, chromium and molybdenum, **characterized in that** the alloy consists of at least 80 percent by weight of cobalt and chromium and that the alloy comprises a proportion of at least 3 percent by weight of molybdenum.

2. The method according to claim 1, wherein the air atmosphere (L) comprises a volume proportion of oxygen in a range from 20 % to 22 % and a volume proportion of nitrogen in a range from 77 % to 79 %.

3. The method according to claim 1 or 2, wherein the sintering of the dental construction (1) in the air atmosphere begins with an air pressure of at least 1.030 hPa.

4. The method according to at least one of the claims 1 to 3, wherein in a heating phase when reaching at least 80 %, preferably at least 90 %, of the sintering temperature, the air atmosphere still comprises a volume proportion of oxygen in a range from 20 % to 22 %, a volume proportion of nitrogen in a range from 77 % to 79 % and an air pressure of at least 1.030 hPa.

5. The method according to at least one of the claims 1 to 4, wherein the sintering is carried out in a closable heating room (H) of a sintering furnace (3).

6. The method according to claim 5, wherein in the heating room (H) during the sintering there is either standard pressure or a low pressure of more than 300 hPa or a vacuum, preferably of a medium vacuum between 300 and 1 hPa or a high vacuum between 1 and 0.001 hPa, is generated, wherein the sintering is carried out under low pressure or in a vacuum.

7. The method according to at least one of the claims 1 to 6, wherein the proportion of titanium in the oxygen binding element (2) is at least 95 %.

8. The method according to at least one of the claims 1 to 7, wherein the cobalt-chromium-alloy comprises cobalt in a proportion of 54 to 70 percent by weight and chromium in a proportion of 20 to 31 percent by weight.

9. The method according to at least one of the claims 1 to 8, wherein the cobalt-chromium-alloy consists of cobalt and chromium by at least 90 percent by weight.

10. An arrangement for sintering a dental construction (1), in particular for carrying out a method according to at least one of the claims 1 to 9, comprising
- a sintering furnace (3) in which a closable heating room (H) is formed, wherein the heating room (H) during sintering is at least temporarily filled with an air atmosphere (L),
- at least one dental construction (1) arranged in the heating room (H) during sintering, wherein the dental construction (1) consists of an alloy which contains cobalt, chromium and molybdenum, wherein the alloy consists of at least 80 percent by weight of cobalt and chromium and wherein the alloy comprises a proportion of at least 3 percent by weight of molybdenum, and
- at least one oxygen-affine oxygen binding element (2) arranged in the heating room (H) during sintering, wherein the oxygen binding element (2) substantially consists of a metal containing titanium or of a metal alloy containing titanium, wherein the proportion of titanium in the oxygen binding element (2) is at least 80 percent by weight.

11. The arrangement according to claim 10, wherein the at least one oxygen binding element (2) is stored in a container (4), preferably arranged in a lateral area of the heating room (H).

12. The arrangement according to claim 10 or 11, comprising at least one holding device (5) for holding the dental construction (1), the holding device (5) being arranged in the heating room (H).

13. The arrangement according to at least one of the claims 10 to 12, comprising a device (6) for generating a low pressure or a vacuum, wherein with this device (6) the low pressure or the vacuum, preferably a medium vacuum or a high vacuum, can be generated in the heating room (H).

## Revendications

1. Procédé de frittage d'une structure dentaire (1) en utilisant un élément de liaison à oxygène (2) à haute affinité pour l'oxygène, dans lequel le frittage de la structure dentaire (1) a lieu au moins par intermittence dans une atmosphère d'air (L), dans lequel l'élément de liaison à oxygène (2) est constitué sensiblement d'un métal contenant du titane ou d'un alliage de métaux contenant du titane, dans lequel la fraction en titane sur l'élément de liaison à oxygène (2) est d'au moins 80 % en poids, dans lequel la structure dentaire (1) est constituée d'un alliage, lequel contient du cobalt, du chrome et du molybdène, **caractérisé en ce que** l'alliage est constitué à hauteur d'au moins 80 % en poids de cobalt et de chrome, et que l'alliage présente une fraction d'au moins 3 % en poids de molybdène.

2. Procédé selon la revendication 1, dans lequel l'atmosphère d'air (L) présente une fraction volumique d'oxygène dans une plage de 20 % à 22 % et une fraction volumique d'azote dans une plage de 77 % à 79 %.

3. Procédé selon la revendication 1 ou 2, dans lequel le frittage de la structure dentaire (1) débute dans l'atmosphère d'air (L) à une pression d'air inférieure à 1030 hPa.

4. Procédé selon l'une quelconque des revendications 1 à 3, dans lequel dans une phase de chauffage, lorsqu'au moins 80 %, de préférence au moins 90 %, de la température de frittage est atteinte, l'atmosphère d'air (L) présente par ailleurs une fraction volumique d'oxygène dans une plage de 20 % à 22 %, une fraction volumique d'azote dans une plage de 77 % à 79 % et une pression d'air inférieure à 1030 hPa.

5. Procédé selon l'une quelconque des revendications 1 à 4, dans lequel le frittage est mis en oeuvre dans un espace de chauffage (H) pouvant être fermé d'un four de frittage (3).

6. Procédé selon la revendication 5, dans lequel il règne, dans l'espace de chauffage (H) lors du frittage, soit une pression normale soit une dépression supérieure à 300 hPa ou un vide, de préférence un vide grossier entre 300 et 1 hPa ou un vide poussé entre 1 et 0,001 hPa, est produit, dans lequel le frittage est mis en oeuvre à une dépression ou sous un vide.

7. Procédé selon l'une quelconque des revendications 1 à 6, dans lequel la fraction en titane sur l'élément de liaison à oxygène (2) est d'au moins 95 %.

8. Procédé selon l'une quelconque des revendications 1 à 7, dans lequel l'alliage de cobalt et de chrome présente une fraction de 54 à 70 % en poids de cobalt et une fraction de 20 à 31 % en poids de chrome.

9. Procédé selon l'une quelconque des revendications 1 à 8, dans lequel l'alliage de cobalt et de chrome est constitué d'au moins 90 % en poids de cobalt et de chrome.

10. Ensemble servant à fritter une structure dentaire (1), en particulier servant à mettre en oeuvre un procédé selon l'une quelconque des revendications 1 à 9, avec
- un four de frittage (3), dans lequel un espace de chauffage (H) pouvant être fermé est réalisé, dans lequel l'espace de chauffage (H) est rempli lors du frittage au moins par intermittence avec une atmosphère d'air (L),
- au moins une structure dentaire (1) disposée lors du frittage dans l'espace de chauffage (H), dans lequel la structure dentaire (1) est constituée d'un alliage, lequel contient du cobalt, du chrome et du molybdène, dans lequel l'alliage est constitué d'au moins 80 % en poids de cobalt et de chrome et dans lequel l'alliage présente une fraction d'au moins 3 % en poids de molybdène, et
- au moins un élément de liaison à oxygène (2) à haute affinité pour l'oxygène disposé lors du frittage dans l'espace de chauffage (H), dans lequel l'élément de liaison à oxygène (2) est constitué sensiblement d'un métal contenant du titane ou d'un alliage de métaux contenant un titane, dans lequel la fraction en titane sur l'élément de liaison à oxygène (2) est d'au moins 80 % en poids.

11. Ensemble selon la revendication 10, dans lequel l'au moins un élément de liaison à oxygène (2) est déposé dans un contenant (4) disposé de préférence dans une zone latérale de l'espace de chauffage (H).

12. Ensemble selon la revendication 10 ou 11, avec au moins un dispositif de maintien (5), disposé dans l'espace de chauffage (H), servant à maintenir la structure dentaire (1).

13. Ensemble selon l'une quelconque des revendications 10 à 12, avec un dispositif de production de dépression ou de vide (6), avec lequel la dépression ou le vide, de préférence un vide grossier ou un vide poussé, peut être produite ou produit dans l'espace de chauffage (H).
